## Europäisches Patentamt
## European Patent Office
## Office européen des brevets

(11) Numéro de publication: **0 051 323**
**A1**

## DEMANDE DE BREVET EUROPEEN

(21) Numéro de dépôt: **81200403.4**

(22) Date de dépôt: **08.04.81**

(51) Int. Cl.³: **A 22 C 11/02**

(30) Priorité: **05.11.80 ES 496590**

(43) Date de publication de la demande:
**12.05.82 Bulletin 82/19**

(84) Etats contractants désignés:
**BE CH DE FR GB IT LI LU NL**

(71) Demandeur: **PERACAULA COROMINAS, D.**
**Gumersindo**
**Avda. Reyes Catolicos, 13**
**OLOT (Gerona)(ES)**

(72) Inventeur: **PERACAULA COROMINAS, D. Gumersindo**
**Avda. Reyes Catolicos, 13**
**OLOT (Gerona)(ES)**

(74) Mandataire: **Pirson, Jean et al,**
**c/o Bureau Gevers, S.A. rue de Livourne, 7 bte 1**
**B-1050 Brussels(BE)**

(54) Dispositif de préparation de saucisses.

(57) Dispositif de préparation de saucisses, en particulier de saucisses dites de "Francfort".

Ce dispositif comprend une embouchure d'alimentation (1) prévue à une de ses extrémités, un appareil de chargement accouplé à cette embouchure pour charger et pousser de la viande hachée à travers cette dernière vers un piston rotatif (2) présentant une cavité intérieure qui au cours de la rotation du piston passe successivement entre une première position qui permet le passage de viande hachée à l'intérieur de cette cavité et vers une embouchure de sortie (34) et une deuxième position qui interrompt ce passage de viande.

Fig.5

1

"Dispositif de préparation de saucisses"

La présente invention est relative à un dispositif de préparation de saucisses, en particulier de saucisses dites de "Francfort".

Il est prévu, suivant l'invention, un dispositif
du type décrit au préambule qui comprend une embouchure
d'alimentation prévue à une de ses extrémités, un appareil de chargement accouplé à cette embouchure pour charger et pousser de la viande hachée à travers cette dernière vers un piston rotatif faisant partie du dispositif
de préparation , ce piston rotatif présentant une cavité
intérieure qui au cours de la rotation du piston passe
successivement entre une première position qui permet le
passage de viande hachée à l'intérieur de cette cavité
et vers une embouchure de sortie pour cette viande, et
une deuxième position qui interrompt ce passage de viande.

Pour permettre une meilleure compréhension de
l'invention, les dessins annexés présentent un exemple de
réalisation de dispositif suivant l'invention, ces dessins n'étant toutefois nullement limitatifs.

La Figure 1 est une vue en élévation latérale du
dispositif suivant l'invention.

La Figure 2 est une vue en bout du même dispositif.

La Figure 3 est une vue en élévation latérale,
prise du côté opposé à la Figure 1.

La Figure 4 représente une vue de l'extrémité du
dispositif opposée à celle de la Figure 2.

La Figure 5 est une vue en coupe verticale du
dispositif suivant l'invention.

La Figure 6 représente une vue en coupe, non à
l'échelle, suivant la ligne VI-VI de la Figure 2.

La Figure 7 représente une vue en coupe suivant la ligne VII-VII de la Figure 5.

Les Figures 8a et 8b représentent une vue de profil et une vue de face de la bague d'arrêt du cylindre du piston rotatif.

La Figure 9 représente un élément élastique en forme de conduit, avec joint torique, pour attacher les boyaux.

Les Figures 10a et 10b représentent des vues en coupe d'une variante de réalisation de piston rotatif.

Suivant l'invention telle qu'illustrée par les dessins on accouple au dispositif de préparation de saucisses, en particulier de saucisses dites de Francfort, sur l'embouchure 1 de ce dispositif, un appareil de chargement qui pousse de la viande hachée vers un piston rotatif 2 du dispositif. Ce piston, lorsque sa cavité interne prend la position horizontale, permet le passage de la viande hachée vers l'embouchure de sortie 16 prévue à l'une des extrémités du dispositif , cette embouchure étant reliée à un tube final de sortie 18 qui permet le travail de remplissage d'un boyau naturel ou synthétique dont le tube précité 18 a été préalablement garni.

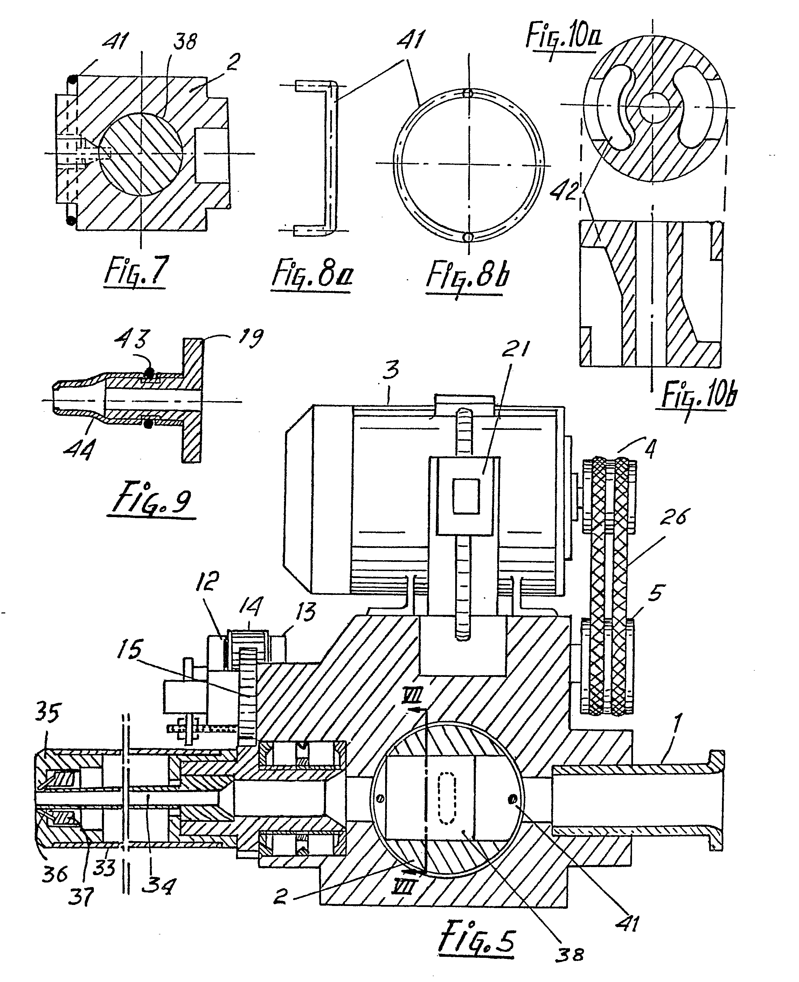

Le dispositif comporte un moteur 3 pourvu d'une poulie solidaire 4 qui, par l'intermédiaire de courroies de transmission 26, entraîne une seconde poulie 5 qui,ainsi qu'il ressort de la Figure 6, fait tourner une vis sans fin 6, laquelle, à son tour, entraîne en rotation une couronne dentée 7 dont l'axe intérieur est l'axe de rotation du piston rotatif 2 mentionné précédemment, ce piston, comme on l'a déjà mentionné, permettant, lorsque sa cavité interne est en position horizontale, le passage de la viande hachée mais ne permettant pas un tel passage dans les autres positions.

3

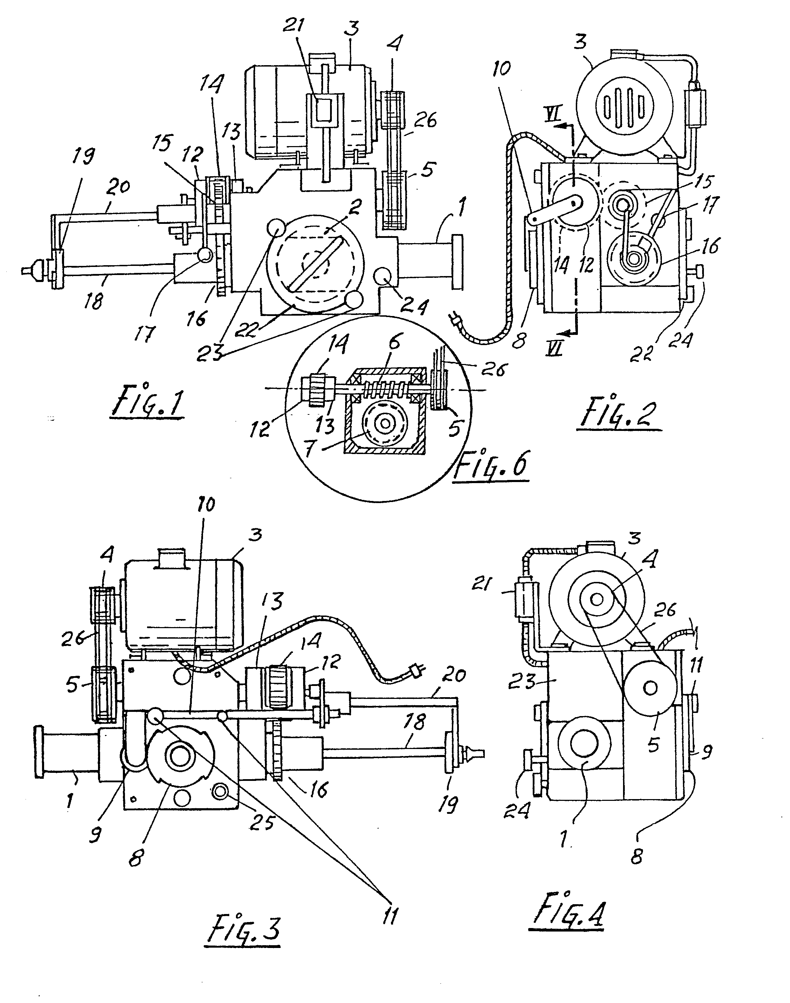

La même rotation de la couronne dentée 7 met en mouvement, par son axe extérieur, un excentrique 8 prévu du côté opposé de la machine par rapport à la Figure 1 (voir les Figures 2 et 3), cet excentrique permettant, grâce à ses parties surbaissées et à ses saillies diamétrales, le déplacement, vers la droite ou vers la gauche, d'une tringle 9 qui à sa partie supérieure comporte une longue extension 10 formant un angle avec le corps de cette tringle 9, cette extension 10 déplaçant un tambour 13 selon un mouvement alternatif qui, dans une de ses positions extrêmes, permet la rotation d'un pignon 14 en le libérant de son emprisonnement et de la pression entre lui-même et un autre tambour 12 disposé de l'autre côté de ce pignon 14.

L'axe de ce pignon 14 est le même que celui de la vis sans fin 6 dont il a été question précédemment.

Le pignon 14 engrène avec un autre pignon 15 qui lui-même engrène avec le pignon 16 de l'embouchure de sortie de la machine, qui porte le tube final de sortie 18 déjà mentionné.

Cette synchronisation de mouvement permet la sortie de la viande hachée par le tube final de sortie 18, d'une manière proportionnée sous l'effet de la rotation du piston 2, ce tube final 18 étant garni du boyau utilisé pour la production de saucisses, en particulier de saucisses de Francfort.

Il y a lieu de tenir compte aussi de ce que, au cours du cycle pendant lequel il n'y a pas de sortie de viande hachée, tandis qu'il reste libre, le pignon 14 est en rotation en faisant tourner solidairement plusieurs fois le pignon 15 avec lequel il est en prise, ce dernier engrenant à son tour avec l'autre pignon 16 de l'embouchure de sortie de sorte que le tube 18 est aussi mis en rotation.

On met le dispositif en marche en actionnant un interrupteur 21, mais, avant cette mise en marche, il faut mettre le boyau en place de manière qu'il garnisse le tube final de sortie 18, il faut placer ensuite l'organe d'assujettissement de boyau 19 et abaisser le crochet existant à l'extrémité libre de la tringle 20, ce crochet empêchant l'expulsion indésirable de l'organe d'assujettissement de boyau 19 durant l'opération.

Pour empêcher que la pression de la viande hachée expulse le pignon de l'embouchure de sortie 16, on prévoit un type quelconque d'organe d'arrêt approprié 17. L'asservissement de la longue extension 10 qui permet le déplacement du tambour 13 est réalisé grâce à des dispositifs de montage, d'asservissement et de guidage 11 de cette tringle 10.

Après avoir nettoyé suivant les nécessités le piston rotatif 2 du dispositif, on ajuste un couvercle 22 que l'on serre d'un quart de tour, ce couvercle restant fixé entre deux arrêts diamétraux 23.

Le conduit d'alimentation 1 du dispositif demeure fixe grâce à la pression d'un boulon à tête 24 que l'on peut actionner à la main.

Pour vérifier le niveau d'huile, le dispositif comporte un regard 25 disposé en un endroit approprié.

Sur la vue en coupe du dispositif, montrée par la Figure 5, et sur les figures suivantes, on montre des détails constructifs avec plus de clarté que sur les figures précédentes. C'est ainsi qu'on peut voir que le piston rotatif 2, qui est l'une des pièces essentielles du dispositif, comporte une bague 41 qui bloque le déplacement d'un cylindre 38 coulissant à l'intérieur de la cavité du piston, le cylindre coulissant 38 ayant une dimension proportionnée respectivement petite, moyenne ou grande en fonction de la quantité de viande hachée à faire passer à chaque rotation du piston. On peut voir aussi sur les figures 10a et 10b une variante de réalisation de piston rotatif 42 à orifices transversaux.

Dans la forme de réalisation particulière illustrée sur la Figure 5, le dispositif comporte un tube 33 qui porte l'organe d'assujettissement du boyau 35 et entoure un tube rainuré 34 de sortie de la viande hachée. Ce tube 33 reçoit, dans son extrémité de sortie, l'organe d'assujettissement de boyau 35, dans lequel se loge une bague élastique 36 devant laquelle se place un noyau 37 réglant l'inclinaison à donner à cette bague élastique 36.

En ce qui concerne l'organe d'assujettissement de boyau 19 illustré sur la Figure 9 dont il a été question antérieurement, il comprend un élément élastique 44 en forme de manchon pour le montage du boyau, et il présente aussi un logement annulaire pour une bague torique 43 qui maintient en place l'élément élastique en forme de manchon 44.

Suivant que le type de boyau à utiliser est naturel ou synthétique, on employera respectivement des ensembles comprenant les éléments 33,34,35,37,38,41 ou bien les éléments 18,19,20,43,44. Les pistons portent les numéros de référence 2 et 42.

Il est évident que l'invention n'est pas limitée aux détails donnés car de nombreuses variantes peuvent être envisagées sans sortir pour autant du cadre du présent brevet.

C'est ainsi que, suivant les boyaux à remplir, on utilisera des tubes de profils différents appropriés aux buts poursuivis.

REVENDICATIONS

1. Dispositif de préparation de saucisses, en particulier de saucisses dites de "Francfort", caractérisé en ce qu'il comprend une embouchure d'alimentation (1) prévue à une de ses extrémités, un appareil de chargement accouplé à cette embouchure pour charger et pousser de la viande hachée à travers cette dernière vers un piston rotatif (2;42) faisant partie du dispositif de préparation, ce piston rotatif présentant une cavité intérieure qui au cours de la rotation du piston passe successivement entre une première position qui permet le passage de viande hachée à l'intérieur de cette cavité et vers une embouchure de sortie pour cette viande, et une deuxième position qui interrompt ce passage de viande.

2. Dispositif suivant la revendication 1, caractérisé en ce que l'embouchure de sortie présente un pignon d'entraînement en rotation (16) et est reliée à un tube final de sortie (18;34), qui est garni d'un boyau naturel ou synthétique dans lequel la viande hachée pénètre.

3. Dispositif suivant l'une ou l'autre des revendications 1 et 2, caractérisé en ce qu'il comporte un moteur (3) comprenant une première poulie solidaire (4) qui, par l'intermédiaire d'une transmission appropriée (26), peut entraîner une seconde poulie (5) qui, à son tour, entraîne en rotation une vis sans fin (6) faisant tourner une couronne dentée (7) comportant un axe intérieur qui est l'axe de rotation du piston rotatif (2;42).

4. Dispositif suivant la revendication 3, caractérisé en ce qu'il comprend un excentrique (8) dont l'axe de rotation est constitué par un axe extérieur de la couronne dentée (7), cet excentrique (8) permettant, en raison de ses parties surbaissées et de ses saillies périphériques diamétrales, le déplacement vers la droite ou vers la gauche

d'une tringle (9) qui consiste en une courte pièce présentant une longue extension (10) formant un angle avec elle, ce mécanisme déplaçant , grâce à cette longue extension (10), un tambour (13) qui, dans une première position extrême,est écarté d'un pignon (14) et permet la rotation de celui-ci et, dans une deuxième position extrême, comprime le pignon (14) entre lui-même et un autre tambour (12) disposé du côté opposé.

5. Dispositif suivant la revendication 4, caractérisé en ce que l'axe du pignon mentionné en dernier lieu (14) est en même temps l'axe de la vis sans fin précitée (6).

6. Dispositif suivant l'une ou l'autre des revendications 4 et 5, caractérisé en ce que le pignon mentionné en dernier lieu (14) engrène avec un autre pignon (15), qui, à son tour, engrène avec le pignon (16) de l'embouchure de sortie du dispositif, qui porte le tube final de sortie (18;34).

7. Dispositif suivant l'une quelconque des revendications 1 à 6, caractérisé en ce qu'un boyau, naturel ou synthétique, qui doit être rempli de viande hachée est disposé pour revêtir le tube final de sortie (18,34) du dispositif, un organe d'assujettissement (19;35) du boyau étant prévu à cet endroit.

8. Dispositif suivant l'une quelconque des revendications 2 à 7, caractérisé en ce que, pour empêcher que la pression de la viande hachée ne puisse écarter de sa position normale et de façon indésirable le pignon (16) de l'embouchure de sortie, un organe d'arrêt et de sécurité (17) est prévu.

9. Dispositif suivant l'une quelconque des revendications 1 à 8, caractérisé en ce que le piston rotatif (2) comporte un cylindre (38) coulissant dans sa cavité et une bague d'arrêt (41) limitant le coulissement du cylindre (38).

10. Dispositif suivant la revendication 9, caractérisé en ce qu'il comporte un cylindre coulissant (38) petit, moyen ou grand suivant les proportions de viande hachée à prévoir.

11. Dispositif suivant l'une quelconque des revendications 1 à 8, caractérisé en ce que le piston rotatif (42) comporte des évidements transversaux.

12. Dispositif suivant l'une quelconque des revendications 7 à 11, caractérisé en ce qu'il comprend un crochet monté, de manière à pouvoir pivoter, à l'extrémité libre d'une tringle (20) disposée parallèlement au tube de sortie (18), au-dessus de lui, le crochet, en position descendue, maintenant dans sa position appropriée l'organe d'assujettissement (19) du boyau en empêchant son expulsion indésirable sous l'effet de la pression de sortie de la viande hachée.

13. Dispositif suivant l'une quelconque des revendications 7 à 11, caractérisé en ce qu'il comporte un tube porteur (33) pour l'organe d'assujettissement (35) de boyau, ce tube porteur (33) entourant un tube rainuré (34) de sortie de la viande hachée, l'organe d'assujettissement (35) de boyau étant disposé à l'extrémité de sortie du tube porteur 33 et comportant un élément élastique conique (36) devant lequel se dispose un noyau de réglage (37) de l'inclinaison à donner à cet élément élastique conique (36).

14. Dispositif suivant l'une quelconque des revendications 7 à 12, caractérisé en ce que l'organe d'assujettissement (19) de boyau comporte un élément élastique en forme de manchon (44) pour le montage du boyau, cet élément (44) présentant un logement annulaire des-

9

tiné à recevoir une bague élastique torique (43) fixant le boyau à l'élément élastique en forme de manchon (44).

15. Dispositif suivant l'une quelconque des revendications 1 à 14, caractérisé en ce que, suivant les boyaux à remplir, le dispositif comporte des tubes de sortie de viande hachée (18;34)), qui sont de profils différents.

Fig.1

Fig.2

Fig.6

Fig.3

Fig.4

0051323

1/2

1/2

Fig.7

Fig.8a

Fig.8b

Fig.10a

Fig.10b

Fig.9

Fig.5

Office européen
des brevets

**RAPPORT DE RECHERCHE EUROPEENNE**

Numéro de la demande

EP 81 20 0403

| | **DOCUMENTS CONSIDERES COMME PERTINENTS** | | | **CLASSEMENT DE LA DEMANDE (Int. Cl. ³)** |
|---|---|---|---|---|
| Catégorie | Citation du document avec indication, en cas de besoin, des parties pertinentes | Revendication concernée | | A 22 C 11/02 |
| X | DE - C - 612 678 (KORTMANN) <br> * page 2, lignes 21-75; figure 2 * | 1,2,4, 6,7 | | |
| X | DE - A - 2 250 598 (ABELE) <br> * page 5, paragraphe 5 à page 7, paragraphe 2 * | 1,2,9, 10 | | |
| X | FR - A - 2 134 713 (HANDTMANN) <br> * page 4, ligne 11 à page 7, ligne 34 * | 1-3,5, 6 | | **DOMAINES TECHNIQUES RECHERCHES (Int. Cl. ³)** <br><br> A 22 C |
| X | CH - A - 534 484 (NIEDECKER) <br> * colonne 3, lignes 35-38; colonne 4, ligne 66 à colonne 5, ligne 4; figures 7-11.* | 1,7 | | |
| A | DE - C - 653 916 (KREHER) <br> * page 1, lignes 38-61 * | 2,7, 12,14 | | |
| A | DE - A - 2 236 081 (ALEXANDER-WERK) <br> * page 3, ligne 8 à page 4, paragraphe 4 * | 7,13 | | **CATEGORIE DES DOCUMENTS CITES** |
| A | FR - A - 2 069 723 (JAVALOY) <br> * page 6, lignes 16-30; figure 5 * | 9 | | X: particulièrement pertinent à lui seul <br> Y: particulièrement pertinent en combinaison avec un autre document de la même catégorie <br> A: arrière-plan technologique <br> O: divulgation non-écrite <br> P: document intercalaire <br> T: théorie ou principe à la base de l'invention <br> E: document de brevet antérieur, mais publié à la date de dépôt ou après cette date <br> D: cité dans la demande <br> L: cité pour d'autres raisons |
| | | | | &: membre de la même famille, document correspondant |

Le présent rapport de recherche a été établi pour toutes les revendications

| Lieu de la recherche | Date d'achèvement de la recherche | Examinateur |
|---|---|---|
| La Haye | 04.02.1982 | DE LAMEILLEURE |

OEB Form 1503.1   06.78